Europäisches Patentamt

European Patent Office

Office européen des brevets

(11) Veröffentlichungsnummer: **0 300 204 B1**

## (12) EUROPÄISCHE PATENTSCHRIFT

(45) Veröffentlichungstag der Patentschrift: **16.12.92**

(21) Anmeldenummer: **88109729.9**

(22) Anmeldetag: **18.06.88**

(51) Int. Cl.⁵: $B60G\ 17/08$

(54) **Dämpfungsvorrichtung.**

(30) Priorität: **22.07.87 DE 3724271**

(43) Veröffentlichungstag der Anmeldung:
**25.01.89 Patentblatt 89/04**

(45) Bekanntmachung des Hinweises auf die
Patenterteilung:
**16.12.92 Patentblatt 92/51**

(84) Benannte Vertragsstaaten:
**DE FR GB SE**

(56) Entgegenhaltungen:
**EP-A- 0 197 316        DE-A- 3 528 830**
**DE-A- 3 532 292        DE-B- 1 580 775**
**FR-A- 2 154 882        FR-A- 2 229 567**
**GB-A- 2 151 746**

(73) Patentinhaber: **ROBERT BOSCH GMBH**
**Postfach 30 02 20**
**W-7000 Stuttgart 30(DE)**

(72) Erfinder: **Rubel, Erich, Dipl.-Ing**
**Stammheimer Str 53**
**W-7140 Ludwigsburg(DE)**

## Beschreibung

### Stand der Technik

Der Erfindung geht aus von einer Dämpfungsvorrichtung nach der Gattung des Hauptanspruchs.

Es ist bereits eine Dämpfungsvorrichtung bekannt (DE-OS 16 55 647), welche mit einer außerhalb eines Stoßdämpfers befindlichen Regeleinrichtung in Verbindung steht. Durch die Regeleinrichtung wird ein veränderlicher Steuerdruck erzeugt, welcher auf ein innerhalb des Stoßdämpfers angeordnetes, die für die Dämpfung maßgebenden Drosselquerschnitte beeinflussendes Steuerorgan wirkt. Die nicht dem Steuerdruck ausgesetzte Seite des Steuerorgans wird dabei sowohl durch die Kraft einer Druckfeder als auch vom Druck eines der Arbeitsräume des Stoßdämpfers beaufschlagt. Parallel zu dem durch das Steuerorgan kontrollierten Drosselquerschnitt sind die beiden Arbeitsräume des Stoßdämpfers noch durch weitere, mit Rückschlagventilen versehene Verbindungskanäle miteinander verbunden. Die bekannte Vorrichtung gestattet eine Einstellung der Stoßdämpferkennlinie auch während des Fahrbetriebes.

Aus der DE-OS 27 38 455 ist ein aktives Dämpfungssystem bekannt, welches über eine Hochdruckpumpe, einen Hochdruckspeicher und Zumeßventile zur Steuerung des Drucks in den Arbeitsräumen verfügt. Da es sich hierbei um eine nur aktiv arbeitende Fahrzeugdämpfung handelt, müssen alle Komponenten für sehr hohe Leistungen (bis 5 kW/Rad) ausgelegt werden, was eine solche Dämpfung sehr teuer und für gewöhnliche Fahrzeuge unwirtschaftlich macht.

Wirtschaftliche Vorteile bringen aktive Dämpfungen jedoch in solchen Fällen, in denen nur geringe Leistungen aufgebracht werden müssen. Dies ist weniger bei großen Dämpfungswerten der Fall, sondern vielmehr in solchen Anwendungsbereichen einer Dämpfungsvorrichtung, in denen vor allem die innere Reibung innerhalb des Systems Fahrzeug-Federung-Dämmpfung überwiegt. Dies gilt vor allem im Fahrbetrieb auf guten Straßen. Hier kann eine mit geringer Leistung arbeitende, aber schnell ansprechende aktive Dämpfung gegenüber einer rein passiven Dämpfung deutlich mehr Komfort bieten.

### Vorteile der Erfindung

Die erfindungsgemäße Dämpfungsvorrichtung mit den kennzeichnenden Merkmalen des Hauptanspruchs bietet demgegenüber den Vorteil, eine aktive Dämpfung zu realisieren, welche nur eine geringe Pumpenleistung braucht, die aber zur Kompensation der inneren Reibung eines Federungs-Dämpfungs-Systems ausreicht. Die Dämpfungsvorrichtung arbeitet sowohl passiv als auch aktiv, wobei die Steuerung durch Betätigung einer einzigen Ventileinrichtung vorgenommen wird.

Vorteilhaft ist insbesondere, daß für eine derartige Dämpfungsvorrichtung eine leichte Pumpe mit geringer Leistung, dünne Leitungen und eine klein und leicht bauende Ventileinrichtung mit geringem Strombedarf verwendet werden können.

### Zeichnung

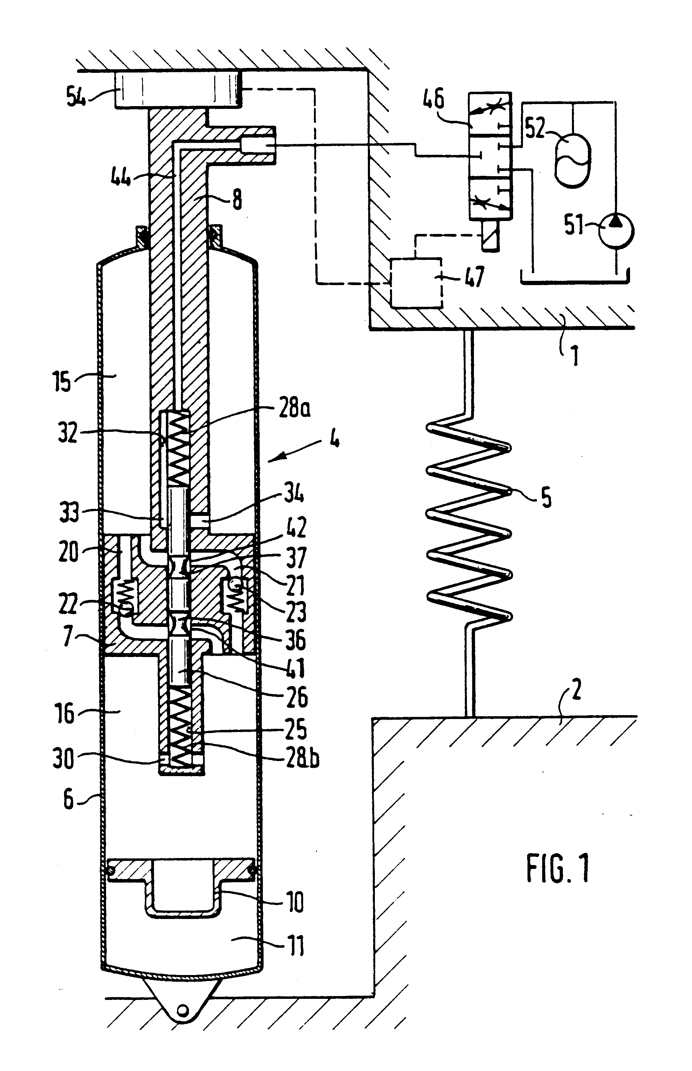

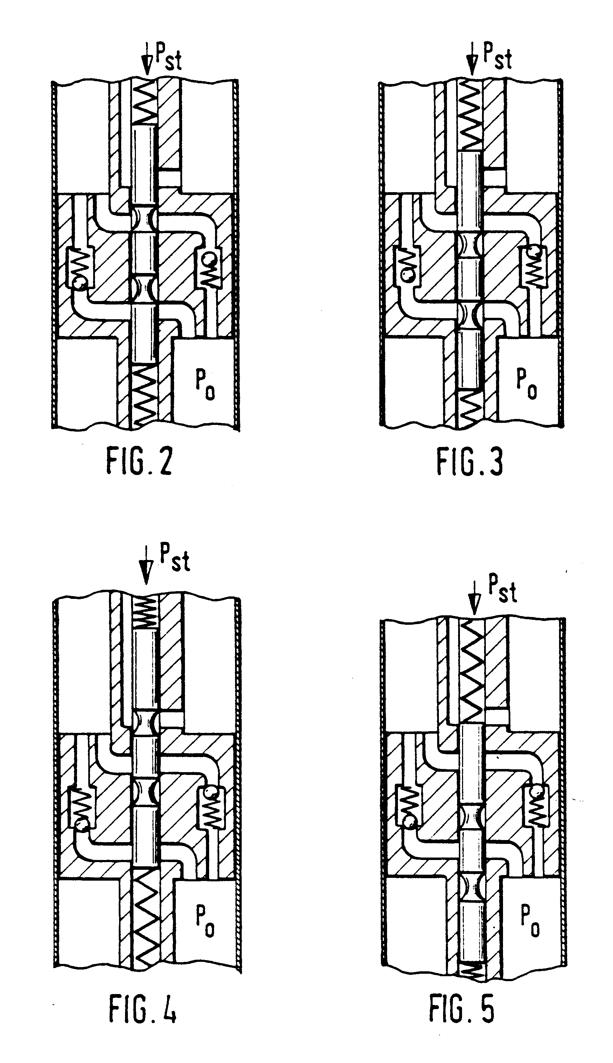

Ein Ausführungsbeispiel der Erfindung ist in der Zeichnung vereinfacht dargestellt und wird im folgenden näher erläutert. Figur 1 zeigt eine Dämpfungsvorrichtung, bestehend in erster Linie aus einem Stoßdämpfer und einer Steuereinrichtung. Die Figuren 2 bis 5 zeigen Ausschnitte aus dem Stoßdämpfer der Figur 1 für verschiedene Arbeitsbereiche der Dämpfungsvorrichtung.

### Beschreibung des Ausführungsbeispieles

Die in Figur 1 dargestellte Dämpfungsvorrichtung umfaßt u.a. einen zwischen einem Fahrzeugaufbau 1 und einer Fahrzeugachse 2 angeordneten Stoßdämpfer 4, zu dem eine Feder 5 parallel angeordnet ist. Der Stoßdämpfer 4 verfügt über einen innerhalb eines Mantelrohres 6 geführten Dämpfungskolben 7, welcher mit einer aus dem Mantelrohr 6 herausragenden Kolbenstange 8 fest verbunden ist. Der Stoßdämpfer 4 ist als sogenannter Einrohr-Stoßdämpfer ausgeführt, weshalb sich an seiner Unterseite ein durch eine bewegliche Trennwand 10 abgeschlossenes Gasvolumen 11 befindet, welches der Volumenkompensation der ein- bzw. ausfahrenden Kolbenstange 8 dient. Die Erfindung ist jedoch nicht auf einen Einrohr-Stoßdämpfer beschränkt, sondern läßt sich auch mit einem Zweirohr-Stoßdämpfer realisieren.

Der Dämpfungskolben 7 unterteilt den Innenraum des Stoßdämpfers 4 in einen ersten Arbeitsraum 15 und einen zweiten Arbeitsraum 16. Zwei Verbindungskanäle 20, 21 verbinden die Arbeitsräume 15, 16 miteinander, wobei sich in den Verbindungskanälen 20, 21 Rückschlagventile 22, 23 befinden, welche nur jeweils in einer Richtung durchströmbar sind. Eine Durchströmung des ersten Verbindungskanals 20 ist über das erste Rückschlagventil 22 nur vom zweiten Arbeitsraum 16 in den ersten Arbeitsraum 15 möglich, eine Durchströmung des zweiten Verbindungskanals 21 über das zweite Rückschlagventil 23 ist nur vom ersten Arbeitsraum 15 in den zweiten Arbeitsraum 16 möglich.

Innerhalb des Dämpfungskolbens 7 oder der Kolbenstange 8 befindet sich eine beispielsweise axial verlaufende Führungsbohrung 25, in der ein als zylindrischer Steuerschieber 26 ausgebildetes Steuerorgan axial gleiten kann. An jeder der Stirnseiten des Steuerschiebers 26 greift jeweils eine Feder 28a, b an. Mit ihrem jeweils anderen Ende liegen die Federn 28a, b an Absätzen innerhalb des Dämpfungskolbens oder der Kolbenstange 8 an. Die Federn 28a, b sind bevorzugt als Schraubenfedern ausgeführt und nehmen den nicht durch den Steuerschieber 26 ausgefüllten Innenraum der Führungsbohrung 25 ein.

Der unterhalb des Steuerschiebers 26 liegende Teil der Führungsbohrung 25, welcher die Feder 28b aufnimmt, steht über Öffnungen 30 mit dem zweiten Arbeitsraum 16 in nicht gedrosselter Verbindung. Der oberhalb des Steuerschiebers 26 befindliche Raum der Führungsbohrung 25 wird auf einem Teil seiner Länge von einer axial verlaufenden Nut 32 begleitet. Gegenüber einem unteren Ende 33 der Nut 32 mündet eine Verbindungsöffnung 34 in die Führungsbohrung 25, wobei sich diese Verbindungsöffnung 34 andererseits zum ersten Arbeitsraum 15 hin öffnet. Der zylindrische Steuerschieber 26 weist eine untere erste Verengung 36 sowie eine obere zweite Verengung 37 auf, deren Durchmesser geringer sind als die Durchmesser des Steuerschiebers 26 bzw. der Führungsbohrung 25. Sowohl der erste Verbindungskanal 20 als auch der zweite Verbindungskanal 21 kreuzen die Führungsbohrung 25, wobei immer dann, wenn die erste Verengung 36 den die Führungsbohrung 25 kreuzenden ersten Verbindungskanal 20 zumindest teilweise überdeckt, eine Durchströmung des ersten Verbindungskanals 20 möglich ist, während immer dann, wenn die zweite Verengung 37 den die Führungsbohrung 25 kreuzenden zweiten Verbindungskanal 21 mindestens teilweise überdeckt, der zweite Verbindungskanal 21 durchströmbar ist. Der Steuerschieber 26 wirkt also mit seinen Verengungen 36, 37 wie ein Drosselventil, wobei ein erster Drosselquerschnitt 41 bei Überdeckung des ersten Verbindungskanals 20 durch die erste Verengung 36 und ein zweiter Drosselquerschnitt 42 bei Überdeckung des zweiten Verbindungskanals 21 durch die zweite Verengung 37 gebildet ist. Die Größe der Drosselquerschnitte 41, 42 hängt von der Lage des Steuerschiebers 26 innerhalb der Führungsbohrung 25 ab.

In den mit der Nut 32 versehenen Teil der Führungsbohrung 25 mündet eine Steuerleitung 44, welche auf einem Teil ihrer Länge axial innerhalb der Kolbenstange 8 verläuft und welche mit einer am Fahrzeugaufbau 1 befestigten, als 3/3-Ventil ausgebildeten Ventileinrichtung 46 verbunden ist. Die Ventileinrichtung 46 ist abhängig von Signalen einer elektronischen Steuereinheit 47 in drei Stellungen schaltbar, wobei in einer ersten Stellung die Steuerleitung 44 mit einer Druckmittelquelle, bestehend beispielsweise aus einer Druckpumpe 51 und einem Speicher 52, in Verbindung steht, in einer zweiten Stellung die Steuerleitung 44 abgesperrt ist und in einer dritten Stellung die Steuerleitung 44 druckentlastet ist. Die elektronische Steuereinheit 47 verfügt über einen Eingang für ein elektrisches Signal eines Kraftaufnehmers 54, welcher die auf den Stoßdämpfer 4 einwirkende Längskraft erfaßt.

Die die Größe und die Art der Dämpfung beeinflussende Stellung des Steuerschiebers 26 innerhalb der Führungsbohrung 25 hängt von den auf die Stirnseiten des Steuerschiebers 26 einwirkenden Drücken in der Steuerleitung 44 bzw. im zweiten Arbeitsraum 16 ab. Übersteigt der Druck im zweiten Arbeitsraum 16 den Steuerdruck in der Steuerleitung 44, so wird der Steuerschieber 26 nach oben hin ausgelenkt und umgekehrt. Das Gasvolumen 11 ist so großzügig bemessen, daß der Druck im zweiten Arbeitsraum 16 beim Ein- und Ausfahren des Stoßdämpfers 4 nur geringen Schwankungen unterliegt.

Anhand der in den Figuren 2 bis 5 dargestellten Fälle wird im folgenden die Funktionsweise der Dämpfungsvorrichtung erläutert.

Im in Figur 2 dargestellten Fall ist der Steuerdruck $p_{st}$ in der Steuerleitung 44 geringer als der Druck $p_0$ im zweiten Arbeitsraum 16, wodurch sich der Steuerschieber 26 geringfügig nach oben in Richtung auf den ersten Arbeitsraum 15 hin bewegt. Dadurch vergrößert sich der zweite Drosselquerschnitt 42 und verringert sich der erste Drosselquerschnitt 41, was zu einer unsymmetrischen Dämpferkennlinie führt, da in der Druckstufe stärker gedämpft wird als in der Zugstufe.

Umgekehrt ist es in dem in Figur 3 dargestellten Fall: Der Steuerdruck $p_{st}$ in der Steuerleitung 44 wird durch entsprechende Betätigung der Ventileinrichtung 46 so eingestellt, daß dieser größer ist als der Druck $p_0$ im zweiten Arbeitsraum 16. Der Steuerschieber 26 wird geringfügig nach unten hin ausgelenkt, wodurch der erste Drosselquerschnitt 41 vergrößert und der zweite Drosselquerschnitt 42 verkleinert wird. Die Dämpferkennlinie ist wiederum unsymmetrisch, wobei jedoch die Zugstufe mit großer Dämpfung, die Druckstufe mit geringer Dämpfung arbeitet.

In den in den Figuren 2 und 3 dargestellten Fällen arbeitet der Stoßdämpfer 4 als passiver Stoßdämpfer, d.h. die Wirkung und die Größe der Dämpfung hängt von der Größe der durchströmten Drosselquerschnitte 41, 42 ab. Anders verhält es sich in den in den Figuren 4 und 5 dargestellten Fällen, in denen der Stoßdämpfer wie ein aktiver Steller arbeitet:

Wird durch entsprechende Betätigung der Ventileinrichtung 46 der Steuerdruck $p_{st}$ in der Steuerleitung 44 sehr viel kleiner als der Druck $p_0$ im zweiten Arbeitsraum 16, so wird der Steuerschieber 26 in seine höchste Lage ausgelenkt, wodurch über die zweite Verengung 37 die Nut 32 mit der Verbindungsöffnung 34 in Verbindung steht. Dies führt zu einem Entweichen von Dämpfungsfluid aus dem ersten Arbeitsraum 15 über die Verbindungsöffnung 34, die zweite Verengung 37, die Nut 32 und die Steuerleitung 44. Das hierdurch einsetzende Druckgefälle zwischen den Drücken im zweiten Arbeitsraum 16 und im ersten Arbeitsraum 15 führt zu einer Bewegung des Dämpfungskolbens 7 in Richtung auf eine Verkleinerung des ersten Arbeitsraumes 15. Der Stoßdämpfer arbeitet als aktive Zugstufe, die Vorzeichen von Kolbenbewegung und Kraft sind einander entgegengesetzt, die Verbindungsteile 20, 21 bleiben verschlossen.

Figur 5 hingegen zeigt den Stoßdämpfer in seiner aktiven Druckstufe. Durch entsprechende Betätigung der Ventileinrichtung 46 wird in die Steuerleitung 44 ein Steuerdruck $p_{st}$ eingespeist, welcher wesentlich größer ist als der Druck $p_0$ im zweiten Arbeitsraum 16, wodurch sich der Steuerschieber 26 weit nach unten absenkt und die Verbindungsöffnung 34 freigibt. Da der Steuerdruck $p_{st}$ größer ist als der Druck im ersten Arbeitsraum 15, gelangt Dämpfungsfluid über die Verbindungsöffnung 34 in den ersten Arbeitsraum 15, wodurch der Dämpfungskolben 7 in Richtung auf eine Vergrößerung des ersten Arbeitsraumes 15 betätigt wird. Der Stoßdämpfer 4 arbeitet als Druckstufe, die Vorzeichen für Kolbenbewegung und Kraft sind einander entgegengesetzt, die Verbindungskanäle 20, 21 bleiben verschlossen.

Man erkennt, wie durch entsprechende Betätigung der Ventileinrichtung 46 durch Signale der elektronischen Steuereinheit 47 der Steuerdruck $p_{st}$ so einstellbar ist, daß wahlweise eine passive oder aktive Dämpfung vorgenommen wird. Da die aktive Dämpfung lediglich der Dämpfung kleinerer, mit hohem Reibungsanteil behafteter Bewegungen dient, fallen die bei aktiver Dämpfung über die Verbindungsöffnung 34 zu- und abzuführenden Mengen an Dämpfungsfluid eher gering aus, wodurch die zur Regelung des Steuerdrucks notwendigen Komponenten kleiner und leichter ausgeführt werden können als bei einer vollaktiven Dämpfung notwendig.

Bei sehr kleinen Kolbengeschwindigkeiten im Stoßdämpfer arbeitet die Dämpfungsvorrichtung wie eine aktive Dämpfung mit all ihren Vorteilen besonders auf guter Fahrbahn. Bei größeren Kolbengeschwindigkeiten, die zu Kräften über der Reibkraftgrenze führen, arbeitet die Dämpfungsvorrichtung als passive, steuerbare Dämpfung entsprechend den in den Figuren 2 und 3 dargestellten Arbeitsbereichen. Die Dämpferkennlinie kann dabei unsymmetrisch sein, oder, wie bei der in Figur 1 dargestellten Stellung des Steuerschiebers 26, symmetrisch.

**Patentansprüche**

1. Dämpfungsvorrichtung mit einem hydraulischen Stoßdämpfer, welcher über mindestens einen Drosselquerschnitt zwischen zwei Arbeitsräumen verfügt, dessen Größe durch ein Steuerorgan veränderbar ist, welches von einem in einer Steuerleitung herrschenden hydraulischen Steuerdruck beaufschlagbar ist, dadurch gekennzeichnet, daß das Steuerorgan (26) in der Weise betätigbar ist, daß die Steuerleitung (44) mit einem der Arbeitsräume (15, 16) in Strömungsverbindung steht, wobei Dämpfungsfluid in bzw. aus einem der Arbeitsräume (15, 16) zu- bzw. abgeführt wird, um den Stoßdämpfer aktiv zu betätigen.

2. Dämpfungsvorrichtung nach Anspruch 1, dadurch gekennzeichnet, daß sowohl bei dem höchsten realisierbaren Steuerdruck als auch bei dem niedrigsten realisierbaren Steuerdruck die Steuerleitung (44) mit demselben Arbeitsraum (15) des Stoßdämpfers in Strömungsverbindung steht.

3. Dämpfungsvorrichtung nach Anspruch 2, dadurch gekennzeichnet, daß das Steuerorgan (26) einerseits durch den in der Steuerleitung (44) herrschenden Steuerdruck und andererseits durch den Druck in einem der Arbeitsräume (15, 16) beaufschlagt wird.

4. Dämpfungsvorrichtung nach Anspruch 3, dadurch gekennzeichnet, daß beiderseits des Steuerorgans (26) jeweils die Kraft einer Feder (28a, b) angreift.

5. Dämpfungsvorrichtung nach Anspruch 4, dadurch gekennzeichnet, daß das Steuerorgan (26) als axial beweglicher Steuerschieber ausgebildet ist.

6. Dämpfungsvorrichtung nach Anspruch 1, dadurch gekennzeichnet, daß zwei jeweils in einer Richtung durchströmbare Drosselquerschnitte (41, 42) vorhanden sind.

7. Dämpfungsvorrichtung nach Anspruch 6, dadurch gekennzeichnet, daß sich die Größe der Drosselquerschnitte (41, 42) durch Betätigung des Steuerorgans (26) unsymmetrisch verändert.

8. Dämpfungsvorrichtung nach Anspruch 1, gekennzeichnet durch eine in Abhängigkeit von Steuersignalen einer Steuereinheit (47) schaltende Ventileinrichtung (46) zur Einstellung des Steuerdrucks in der Steuerleitung (44).

## Claims

1. Damping device having a hydraulic shock absorber which has at least one throttle cross section between two operating chambers, the size of which throttle cross section is variable by means of a control member which can be subjected to a hydraulic control pressure prevailing in a pilot line, characterised in that the control member (26) can be actuated in such a way that the pilot line (44) is in flow connection with one of the operating chambers (15, 16), damping fluid being fed into or drained from one of the operating chambers (15, 16) in order to activate the shock absorber.

2. Damping device according to Claim 1, characterised in that the pilot line (44) is in flow connection with the same operating chamber (15) of the shock absorber both in the case of the highest implementable control pressure and in the case of the lowest implementable control pressure.

3. Damping device according to Claim 2, characterised in that the control member (26) is subjected on the one hand to the control pressure prevailing in the pilot line (44) and on the other hand to the pressure in one of the operating chambers (15, 16).

4. Damping device according to Claim 3, characterised in that the force of a spring (28a, b) acts in each case on both sides of the control member (26).

5. Damping device according to Claim 4, characterised in that the control member (26) is constructed as an axially movable control valve.

6. Damping device according to Claim 1, characterised in that two throttle cross sections (41, 42) are present, through which flow is possible in one direction in each case.

7. Damping device according to Claim 6, characterised in that the size of the throttle cross sections (41, 42) varies asymmetrically by actuating the control member (26).

8. Damping device according to Claim 1, characterised by a valve apparatus (46), which switches as a function of control signals of a control unit (47), for adjusting the control pressure in the pilot line (44).

## Revendications

1. Dispositif d'amortissement comprenant un amortisseur hydraulique possédant au moins, entre les deux chambres de travail, un étranglement dont la grandeur peut être modifiée par un organe de commande, qui peut lui-même être soumis à l'action d'une pression de commande hydraulique régnant dans un conduit de commande, dispositif caractérisé en ce que l'organe de commande (26) peut être actionné de manière que le conduit de commande (44) se trouve en liaison fluide avec une des chambres de travail (15, 16), le fluide amortisseur entrant ou sortant de l'une et l'autre des chambres de travail (15, 16) de manière à rendre actif l'amortisseur hydraulique.

2. Dispositif d'amortissement selon la revendication 1, caractérisé en ce que le conduit de commande (44) est en liaison fluide avec la même chambre de travail (15) de l'amortisseur hydraulique, que la pression de commande soit à son niveau le plus élevé, ou à son niveau le plus bas.

3. Dispositif d'amortissement selon la revendication 2, caractérisé en ce que l'organe de commande (26) est soumis à l'action, d'une part, de la pression de commande régnant dans le conduit (44), et d'autre part, de la pression régnant dans une des chambres de travail (15, 16).

4. Dispositif d'amortissement selon la revendication 3, caractérisé en ce que l'organe de commande (26), de chaque côté, est soumis à l'action d'un ressort (28a, b).

5. Dispositif d'amortissement selon la revendication 4, caractérisé en ce que l'organe de commande (26) est constitué par un tiroir mobile axialement.

6. Dispositif d'amortissement selon la revendication 1, caractérisé en ce qu'il comporte deux sections d'étranglement (41, 42) traversables chacune dans un sens.

7. Dispositif d'amortissement selon la revendication 6, caractérisé en ce que la manoeuvre de l'organe de commande (26) fait varier de manière asymétrique les dimensions des sections d'étranglement (41, 42).

8. Dispositif d'amortissement selon la revendication 1, caractérisé en ce qu'il comporte un système de soupapes (45) qui règle la pression de commande dans le conduit de commande (44), en fonction des signaux délivrés par une unité de commande (47).

FIG. 1

FIG. 2

FIG. 3

FIG. 4

FIG. 5